# EUROPEAN PATENT SPECIFICATION

(11) **EP 4 225 039 B1**
(45) Date of publication and mention of the grant of the patent: **06.11.2024**
(21) Application number: 21798770.0
(22) Date of filing: 04.10.2021
(51) Int. Cl.: A23C 13/12, A23C 15/12, A23C 19/09, A23L 27/00, A23L 29/10, A23L 29/212, A23L 7/10, A23L 35/00, A23C 19/08

(54) **COMPOSITION FOR THE PREPARATION OF INSTANT DRESSINGS FOR RICE AND INSTANT DRESSINGS OBTAINED FROM SAID COMPOSITION**
ZUSAMMENSETZUNG ZUR HERSTELLUNG VON INSTANTDRESSING FÜR REIS UND AUS DIESER ZUSAMMENSETZUNG ERHALTENE INSTANTDRESSING
COMPOSITION POUR LA PRÉPARATION D'ASSAISONNEMENTS INSTANTANÉS POUR RIZ ET ASSAISONNEMENTS INSTANTANÉS OBTENUS À PARTIR DE LADITE COMPOSITION

(30) Priority: 05.10.2020 IT 202000023362
(43) Date of publication of application: 16.08.2023
(73) Proprietor: 4-Chef S.r.l., 36100 Vicenza (IT)
(72) Inventor: CASALINI, Rudy, 36100 Vicenza (IT)
(74) Representative: De Gregori, Antonella
(86) International application number: PCT/IB2021/059074
(87) International publication number: WO 2022/074529

(56) References cited:
- EP-A1- 0 653 166
- EP-A1- 1 172 037
- WO-A1-2012/119252
- DATABASE GNPD [online] MINTEL; 17 September 2020 (2020-09-17), ANONYMOUS: "Four Cheese Concentrated Stock Cubes", XP055782504, retrieved from https://www.gnpd.com/sinatra/recordpage/8111415/ Database accession no. 8111415
- DATABASE GNPD [online] MINTEL; 10 June 2004 (2004-06-10), ANONYMOUS: "Risotto al Vino Barbera Sauce", XP055782436, retrieved from https://www.gnpd.com/sinatra/recordpage/275932/ Database accession no. 275932
- DATABASE GNPD [online] MINTEL; 10 June 2004 (2004-06-10), ANONYMOUS: "Risotto al Vino Barbera Sauce", XP055782436, retrieved from https://www.gnpd.com/sinatra/recordpage/275932/ Database accession no. 275932
- DATABASE GNPD [online] MINTEL; 17 September 2020 (2020-09-17), ANONYMOUS: "Four Cheese Concentrated Stock Cubes", XP055782504, retrieved from https://www.gnpd.com/sinatra/recordpage/8111415/ Database accession no. 8111415
- ANONYMOUS: "Four Cheese Risotto | Knorr Selects(TM) | Knorr CA", 10 August 2020 (2020-08-10), XP055815884, Retrieved from the Internet <URL:https://web.archive.org/web/20200810080052/https://www.knorr.com/ca/en/knorr-products/knorr-selects/selects-four-cheese-risotto.html> [retrieved on 20210621]
- ANONYMOUS: "Heston Blumental's acidulated butter for risotto - Discuss Cooking - Cooking Forums", 19 August 2017 (2017-08-19), XP055815923, Retrieved from the Internet <URL:https://web.archive.org/web/20170819000446/https://www.discusscooking.com/forums/f20/heston-blumentals-acidulated-butter-for-risotto-98227.html> [retrieved on 20210621]

## Description

### FIELD OF THE INVENTION

The invention relates to a composition for preparing instant dressings for rice having various flavours, and the instant dressings obtained starting from said composition, to be used for reproducibly obtaining a wave risotto.

### STATE OF THE ART

Risotto is a typical first course of the Italian cuisine, originating in the region of Veneto and then spreading throughout Northern Italy and now widespread in numerous versions throughout the country and also abroad.

The preparation of a classic risotto is well known in both hotel and home environments.

The preparation process of risotto ideally comprises a first step for preparing chopped onion, which is then stewed together with the rice. The mixture obtained is normally blended with white wine, until the alcohol has completely evaporated. In a second moment, a quantity of broth is added little by little to the toasted and blended rice, as required, until absorption, and cooking the rice for about 18-20 minutes.

Depending on the dressing chosen for the risotto, this is added before or during the addition of the broth.

Finally, there is the final step for adding cheese and butter and the risotto is left to rest for about 2 minutes in a covered pot.

This whole process requires time, precision in adding ingredients and manual skill in dosing the water during cooking and mixing during creaming.

The greatest difficulty in the preparation of a perfect risotto is to obtain the right final creaminess.

When the final result is a risotto that is neither too dry nor too brothy, but dense and creamy at the right point, it is called "wave risotto".

The name derives from the movement of the rice when, at the end of cooking, the pot is moved with a sharp blow, which is in fact a kind of wave. In practice, the rice folds over itself. When it is time to be served, it will therefore delicately follow the inclination of the plate.

In order to obtain a perfect wave rice, fats must be added (such as butter and cheese) at the end of cooking. These fats create an emulsion with the starch released by the rice, which makes the resulting risotto creamy.

This step is commonly called "creaming" and is probably the most important and delicate step in the preparation of a risotto.

The creaming must be effected with the heat off and without stirring, but "pushing" the pot backwards and forwards making the rice fold over itself, creating the waves, and in the meantime incorporating the butter and cheese into the rice.

It is specifically due to the delicacy of this step, that it is difficult to reach a satisfactory and reproducible result at home.

All the more reason, on a large scale, in the catering field, where large quantities of product must be supplied with optimal characteristics in a short time, there is a need for optimizing the rice preparation phase and, in particular, the more important creaming step.

Furthermore, again in the catering industry, the not always adequate preparation of the kitchen staff due, among other reasons, to the high costs of professionals in the field, makes it even more complex to obtain a high-quality product, especially when dealing with a dish that requires long preparation times and precision, such as risotto.

An example of a dressing for risottos is described in the document "Risotto al Vino Barbera Sauce" (Mintel; 10 June 2004; XP055782436) relating to a dressing marketed in Portugal, generally comprising Barbera wine, parmesan cheese, water, onions, acidifiers, modified starches and other components.

In light of all of these issues, in the catering field, the reproducibility of the final product is often compromised, with the consequence of not being able to always guarantee the customer a high-quality wave risotto.

In order to overcome the limitations of the known techniques for preparing risottos, the need was still felt for a product that was simple to make and use, which would allow a reproducible and immediate high-quality product to be obtained, both at home and in the catering field, with simplicity and immediacy, without renouncing the variety of flavours and ingredients.

In the light of the limitations and difficulties of the classical method of preparing risottos, the primary objective of the present invention is to provide a food composition and a preparation method that uses it, which allows even inexperienced people to obtain wave risottos in a fast, direct and simple way, with a quality result that is always valid and reproducible.

### SUMMARY OF THE INVENTION

This objective is achieved with the present invention, which in a first aspect relates to a composition for the preparation of instant dressings for rice, comprising:
- rice starch gel;
- centrifuged and/or surfacing butter in a ratio of 0.67:1 by weight with respect to the weight (w/w) of the rice starch gel;
- a cheese chosen from Parmigiano Reggiano DOP (Parmesan cheese) and Grana Padano DOP in a ratio of 0.4:0.8 w/w with respect to the weight of the rice starch gel;
- an acidity regulator selected from sour butter in a ratio of 0.05:0.15 w/w with respect to the weight of the rice starch gel and wine vinegar in a ratio of 0.05:0.08 w/w with respet to the weight of the rice starch gel;
- salt in a ratio of 0.08:0.1 w/w with respect to the weight of the rice starch gel; and
- optionally, one or more ingredients selected from garlic in a ratio of 0.009:0.02 w/w, meat stock in a ratio of 0.009:0.02 w/w, meat extract in a ratio of 0.009:0.02 w/w, vegetable extract in a ratio of 0.009:0.02 w/w, with respect to the weight of the rice starch gel.

In a further aspect, the invention relates to the procedure for obtaining said composition and said dressing, and in a last aspect a procedure for preparing an instant wave risotto The invention is defined by the appended set of claims.

### DETAILED DESCRIPTION OF THE INVENTION

The composition of the invention is to be used as a base with which it is possible to prepare instant rice dressings with different flavours, and allows, both at home and in the catering field, a reproducible and immediate high-quality wave risotto to be obtained with simplicity and immediacy, without having to renounce the variety of flavours and ingredients, following a delicate but essential creaming step for the final result.

The following terms are used in the present invention:
- "cooking stock" refers to a sauce that is usually obtained by reducing the sauce remaining from a previous cooking of meat, vegetables or fish. In the specific case of the present invention, said cooking stock is a meat stock and is reduced by one third with respect to its initial volume;
- "sour butter" refers to an emulsion of a fat component, such as butter, with an acid component, originally sour cream, then substituted with wine vinegar and onion. This product is used at the beginning of the preparation step of the risotto and replaces the sauté, creating the right balance between the aroma, acidity and creaminess of the risotto;
- "centrifuged butter" refers to a butter obtained through the centrifuge production technique. Specifically, the freshly milked milk is initially subjected to various filtration processes to eliminate impurities, then to a centrifugation at low temperatures and at a rate ranging from 6,500 to 7,000 rpm, which allows the fat to be separated from the low-fat milk. The butter obtained from this production method is "sweet", as fermentation steps are not included in the production technique. From an organoleptic point of view, it is a stable butter with respect to the rancidity phenomenon and is therefore easy to store. For the purposes of the present invention it can be used as an alternative to surfacing butter or mixed with the same;
- "surfacing butter" refers to the butter obtained from the cream that remains from dairy production. It is therefore a by-product of cheese production. Said butter is produced using the surfacing technique, which consists of collecting the milk in large tubs and leaving it to rest for more or less 20 hours, at 15°C. The cream then surfaces naturally, separating itself from the whey. After this first phase, the product must be subjected to other industrial processes (such as pasteurization and neutralization of the acidity), in order to eliminate the microbes present in the surfacing cream which is very acidic (bacterial development is favoured by the fact that the milk is left to rest for so many hours in the tubs). This type of butter is more "acidic" and less valuable than that obtained by centrifugation and is also less stable from an organoleptic point of view. For the purposes of the present invention it can be used as an alternative to centrifuged butter or mixed with it;
- the ingredient indicated in the text as "smoke", used in drops, is a liquid composition known in the food industry as "liquid smoke" and widely available commercially;
- in the following description and in the examples, for the sake of simplicity, all the quantities of the ingredients are indicated as parts by weight with respect to 1 part by weight of rice starch gel.

In a first aspect, the invention relates to a composition comprising: rice starch gel, centrifuged and/or surfacing butter, a cheese selected from Grana Padano PDO and Parmigiano Reggiano PDO (Parmesan cheese), an acidity regulator selected from sour butter and wine vinegar, salt and optionally one or more ingredients chosen from garlic, meat sotck, meat extract and vegetable extract.

Starch is an organic compound belonging to the class of carbohydrates (or polysaccharide carbohydrate) characterized by a large number of polymerized glucose units. This compound is commonly contained in various foods, and there are therefore numerous types of starch, such as corn starch, potato starch, rice starch.

In nature, starch has a semi-crystalline arrangement in the granules, which determines its almost total insolubility in water at room temperature.

Partial solubilization is possible however through an increase in temperature and the addition of water, which leads to the formation of a gel.

The gelatinization of starch also causes a change in the digestibility of starch: the crystalline form is difficult to attack by starch enzymes (such as α-amylase and β-amylase), whereas gelatinized starch is even more so as a consequence of the structural disorganization that has taken place.

Unlike other starches, rice starch, which appears as a very fine white powder, already has a greater solubility in water without the formation of lumps, its use in the form of a gel therefore makes it a fundamental component in the production of a nutritional composition for an instant risotto dressing.

Rice starch is a polysaccharide obtained from rice flour that is used in cooking especially as a thickener, and can be easily found as it is widely available commercially. Rice starch can also be prepared from rice as part of the production process of the composition of the invention, as described hereunder.

An advantage of choosing rice starch with respect to other types of starch available on the market, specifically corn starch and potato starch, is the absence of gluten, therefore the possibility of being able to extend its use in the kitchen even in the presence of various food allergies, such as celiac disease.

Furthermore, said specific starch does not affect the flavour of the final product, having an almost totally neutral flavour and, compared to any other type of starch, it is particularly suitable when it comes to its specific use for the preparation of risottos.

Rice starch gel, used as the main ingredient in the composition of the invention, is obtained by simply cooking the rice starch in a quantity of water from 8 to 12 times the weight of the starch.

The second ingredient necessary for the purposes of the present invention is butter, as the first source of fat, capable of imparting taste and creaminess. As already specified, said butter can alternatively be centrifuged and/or surfaced, depending on availability. Both types are widely available on the market. Said component is present in the food composition in quantities ranging from 0.67 to 1 parts by weight.

A second source of fat, necessary for the food composition of the invention, is cheese, chosen from Parmigiano Reggiano DOP (Parmesan cheese) and Grana Padano DOP. It helps, in fact, to regulate the acidity and creaminess of the final product, providing the fat component necessary for a good wave risotto during the creaming phase.

The amount of cheese to be added to the food composition according to the invention ranges from 0.4 to 0.8, preferably from 0.45 to 0.67 parts by weight.

Another ingredient necessary for the composition is the acidity regulator, which balances the taste of the rice, providing it with the right balance between acidity and creaminess.

Said acidity regulator is chosen from the group consisting of sour butter and white wine vinegar.

In one embodiment, the acidity regulator is sour butter and, as already described above and as will be evident from the examples, said sour butter is a specific emulsion of butter, onion and wine vinegar. Sour butter is present in the food composition in quantities ranging from 0.04 to 0.15, preferably from 0.09 to 0.13 parts by weight.

In a different embodiment, the acidity regulator is wine vinegar in a quantity ranging from 0.05 to 0.08, preferably from 0.06 to 0.07 parts by weight.

The acidity regulator is preferably sour butter when centrifuged butter is used and the acidity regulator is wine vinegar when surfacing butter is used.

In order to control the flavour of the composition, salt must be added in a quantity ranging from 0.08 to 0.1 and preferably equal to 0.09 parts by weight.

One or more ingredients selected from garlic, meat stock, meat extract and vegetable extract can then be optionally added to the composition of the invention. The choice of these additional ingredients depends on the desired taste of the food composition of the invention, as will appear evident from the Examples of the preparations of the individual compositions.

When one or more of these optional ingredients are used, garlic is used in an amount ranging from 0.009 to 0.02 parts by weight, the meat stock in an amount ranging from 0.009 to 0.02 parts by weight, the meat extract in an amount ranging from 0.009 to 0.02 parts by weight and the vegetable extract in an amount ranging from 0.009 to 0.02 parts by weight.

Meat stock is an ingredient that can be prepared by cooking bones with marrow or non-noble parts of meat. A typical preparation provides for cooking 2 Kg. of veal bones, cartilage, scraps and foot in the oven at 200°C for 35 minutes, the subsequent addition of 250 grams of carrots and 150 grams of onion with continued cooking at 200°C for 5 minutes and the final addition, cooking and evaporation of the residual liquids of 300 grams of white wine, 3 Kg of water, 100 grams of celery stalks, 300 grams of tomatoes, 200 grams of Champignon mushrooms, 16 grams of garlic and aromas, chosen from rosemary, bay leaf and peppercorns, for 4 hours at 100°C. Each of said optional ingredients, when present, is preferably in an amount equal to 0.01 parts by weight.

In an embodiment the food composition is an instant dressing which further comprises a flavouring agent.

The flavouring agent can be any of those known for the preparation of risottos. The quantity of flavouring agent to be added can vary within wide limits, depending on the intensity of the taste imparted by the agent for the same weight: for example, saffron is a very light powder of which it is sufficient to add very small quantities for imparting the relative taste to a risotto, whereas for other flavourings such as basil and red turnip, higher quantities must be added. The types of flavouring agents, and the ranges of quantities in which these are to be used, will be apparent to those skilled in the field.

Just a few examples of possible flavouring agents and the quantity ranges within which these must be added to the composition described above for preparing an instant dressing for risottos according to this aspect of the invention, are provided hereunder:
- cuttlefish-ink-flavoured dressing, obtained by adding this ingredient in a quantity ranging from 0.08 to 0.1 parts by weight, preferably 0.09 parts by weight, to the composition of the invention;
- red-turnip-flavoured dressing, obtained by adding this ingredient in a quantity ranging from 0.16 to 0.18 parts by weight, preferably 0.17 parts by weight, to the composition of the invention;

- saffron-flavoured dressing, obtained by adding this powder ingredient in a quantity ranging from 0.001 to 0.003 parts by weight, preferably 0.002 parts by weight, to the composition of the invention;
- basil-flavoured dressing, obtained by adding this ingredient in leaves in quantities ranging from 0.1 to 0.3 parts by weight, preferably 0.2 parts by weight, to the composition of the invention;
- smoke-flavoured dressing, obtained by adding smoke to the composition of the invention in a quantity ranging from 20 to 25 drops, preferably 23 drops, per 100 g of starch gel riso.

Similarly, and by adjusting the quantities of flavouring agents on the basis of experience or a few indicative tests, a person skilled in the field can obtain instant dressings with other flavours, for example truffle, amarone, porcini mushrooms, anchovies, parmesan, radish, scampi, pumpkin, champagne, wild herbs, peppers, etc.

In a further aspect, the invention relates to obtaining the composition described above.

The process according to this aspect of the invention comprises the following steps:
a) preparing a rice starch gel by mixing water and rice in a thermal cutter at a temperature ranging from 100 to 70°C, at a rate ranging from 2,000 rpm to 6,000 rpm for a duration within the range of 10 to 30 minutes;
b) mixing centrifuged and/or surfacing butter, a cheese selected from Parmigiano Reggiano DOP (Parmesan cheese) and Grana Padano DOP, an acidity regulator selected from sour butter and wine vinegar, salt and at least one additional ingredient selected from garlic, meat stock, meat extract, vegetable extract, wherein said sour butter is an emulsion of onions with butter and white wine vinegar, said emulsion being prepared by mixing onions, butter, white wine and white wine vinegar, cooking for a duration within the range of 5 to 20 minutes, at a temperature within the range of 70 to 110°C and subsequent filtration;
c) dissolving and mixing the mixture of step b) in a thermal cutter at a rate within the range of 14,000 to 10,000 rpm and at a temperature within the range of 10 to 50°C for a duration within the range of 10 to 30 seconds.

As will be evident to a skilled person in the field, the operations specified above have been indicated with the letters a) to b) in order to be able to clearly identify them, but this does not mean that these operations must necessarily be carried out in the order indicated. They can be effected in any order and consist respectively in the preparation of three different mixtures: step a) rice starch gel, step b) sour butter and mixture of butter, cheese, acidity regulator and at least one additional ingredient.

The process is described hereunder with reference to a typical preparation, wherein the rice starch gel is prepared starting from 150 g of rice starch; as will be evident to a skilled person in the field, all the quantities listed hereunder can be rescaled if a different quantity of rice is used for obtaining the starch.

For the preparation of the rice starch gel (step a), 1,400 grams of water and 150 grams of rice starch are used, and the mixing takes place in a thermal cutter at a temperature of 85°C at a rate of 4,000 rpm for 15 minutes.

For the preparation of sour butter (step b), i.e. an emulsion of onions, butter and white wine vinegar, 160 grams of onions, 250 grams of butter, 250 ml of white wine and 110 ml of white wine vinegar are used, and the cooking has a duration of 10 minutes, at a temperature of 100°C.

As an alternative to sour butter (step b), wine vinegar can be added, again as an acidity regulator, in a quantity ranging from 20 to 30 grams, preferably 26 grams.

In step b) the components prepared as described above are mixed together.

Step c) is effected at a rate of 12,000 rpm and at a temperature of 30°C for a duration of 20 seconds.

The meat stock used in some compositions of the invention is an ingredient whose preparation is known to skilled persons in the field. According to a typical recipe, it can be prepared by cooking 2 kg of veal bones, cartilage, scraps and foot in the oven at 200°C for 35 minutes; subsequently adding 250 grams of carrots, 150 grams of onion and continuing cooking at 200°C for 5 minutes; then adding 300 grams of white wine, 3 kg of water, 100 grams of celery stalks, 300 grams of tomatoes, 200 grams of champignon mushrooms, 16 grams of garlic and herbs selected from rosemary, bay leaf, peppercorns and cooking for 4 hours at 100°C until the residual liquids have evaporated.

Alternatively to meat stock, a meat extract or vegetable extract can be used for preparing a composition of the invention, preferably in a quantity ranging from 0.009 to 0.02, more preferably equal to 0.01 parts by weight.

The instant dressings of the invention, containing the flavouring agent, can be prepared in different ways.

The flavouring agent can be added, in the quantities indicated above, already in the preparation phase of the composition, in step c) or in step d) of the procedure described above.

Alternatively, the flavouring agent can be added to the composition later, for example when adding this to the rice during the preparation of a risotto.

Both the composition and the instant dressings deriving from the same can be prepared in a single-portion quantity and can be used immediately after preparation, or be prepared in greater quantities for storage before use.

In both cases, for obtaining a reproducible wave risotto, the importance has been noted that the composition or instant dressing containing it be pre-measured.

For this purpose and especially in the case of subsequent storage, the compositions described above, whether including different aromas or not, can be divided into single portions of instant dressing of about 25 grams each, so as to allow the average user an easy use and dosage of said compositions, depending on the type and quantity of risotto to be prepared, taking into consideration that indicatively it has been observed that for a quantity of 200 grams of rice, 3 single portions of instant dressing are required, equivalent to about 75 grams of instant dressing comprising the compositions described above.

In this case, specifically the preparation for storage, the procedure described above can further comprise the following steps:
d) dividing the composition or instant dressing of the invention into single portions of about 25 grams each, in moulds;
e) subjecting the single portions in moulds to blast chilling within a temperature range of 0 to + 6°C, for a duration ranging from 5 to 15 minutes;
f) removing the single portions from the moulds;
g) vacuum-packing the single portions of step f);
h) subjecting the vacuum-packed single portions to blast chilling at a temperature ranging from -30 to -10°C for a duration of 1 to 3 hours; preferably operating at a temperature of -20°C for 2 hours.

The blast chilling of step e) has the purpose of maintaining the duration of the portions of the composition or of the dressing according to the invention for a long period of time, thus allowing them to be easily stored; preferably said blast chilling of step e) takes place at a temperature of +3°C for a duration of 10 minutes.

The blast chilling operations of the process, (steps e and h), take place using equipment and according to procedures known in the food industry.

A further aspect of the present invention relates to a rapid preparation of an instant wave risotto, comprising the following steps:
i) preparing a precooked rice by boiling rice for 10 minutes in a quantity of water ranging from 1.8 to 2.2 times the weight of the rice;
1) adding to the precooked rice prepared in step i), from 50 to 60 grams (preferably 55 grams) of water and from 40 to 50 (preferably 40 grams) grams of the food composition or instant dressing of the invention per 100 grams of precooked rice;
l') if in step 1) only the food composition of the invention was added to the rice, adding a flavouring agent in the doses indicated above;
m) bringing the mixture of step 1) or l') to boiling point and stirring until the composition has dissolved.

The inventors have observed that by operating in this way it is possible to obtain a result that is always satisfactory and repeatable, both for domestic environments where the users can be more or less skilled, and in also the catering field, where the staff can be more or less experienced.

The invention will be further described in the following experimental part, including the description of the production examples of the single ingredients of the composition, production of the composition, and production of instant dressings of the invention having various flavours.

### EXAMPLES - Materials and Methods

In the following examples, a cutter model HM-HOTMIXGASTRO and a Zanussi RF50A 5 Tray food blast chiller were used.

### Example 1 - Preparation of the rice starch gel

1,400 grams of water were measured and 150 grams of rice starch were added. All the ingredients were poured into the glass of the thermal cutter, programmed at a temperature of 85°C and at a rate of 4,000 rpm. The mixture was stirred for 15 minutes at a constant temperature until complete homogeneity. Once the desired uniformity had been reached, the mixture was poured into closed plastic containers and was subjected to blast chilling at +3°C in the food blast chiller.

The rice starch gel prepared in this example was used in all the subsequent examples in which this ingredient is mentioned.

### Example 2 - Preparation of sour butter

Onions were peeled and thinly sliced (160 g) to which 250 ml of white wine, 110 ml of white wine vinegar were then added.

The mixture thus obtained was brought to boil at 100°C for 2 minutes, until the alcohol present in the white wine had evaporated.

The heat was then lowered, leaving the mixture to simmer for 10 minutes, until the onions were transparent and had absorbed the residual liquid.

Once the mixture had been removed from the heat, 250 grams of butter were added and the mixture was stirred, until the butter had completely melted and was incorporated into the hot mixture.

The mixture was finally filtered with a fine mesh strainer and subsequently collected in a container of fatty foods, thus obtaining an emulsion or, in this case, sour butter.

The resulting sour butter was finally blast chilled at +3°C for 10 minutes.

The sour butter prepared in this example was used in all the subsequent examples in which this ingredient is mentioned.

### Example 3 - Preparation of precooked rice

200 grams of rice and 400 grams of water were measured.

When boiling point had been reached after 3 minutes at 100°C, the rice was poured into the water and cooked for 8 minutes. The rice was subsequently drained and poured into plates and subjected to blast chilling at +3°C for 10 minutes.

### Example 4 - Preparation of a meat stock

The ingredients of Table 1 were weighed.

**Table 1**

| **Ingredients** | **Quantity (grams)** |
|---|---|
| Veal bones, cartilages and foot | 2000 |
| Carrots | 250 |
| Onion | 150 |
| White wine | 300 |
| Water | 3000 |
| Celery stick | 100 |
| Tomatoes | 300 |
| Champignon Mushrooms | 200 |
| Garlic | 16 |
| Tomato concentrate | 30 |
| Aromas (rosemary, bay leaf, peppercorns) | 3 |

The veal bones, with the cartilages and the foot were roasted in the oven at 200°C for 35 minutes.

The carrots and onion were then added and left in the oven at 200°C for 5 minutes.

After removing the fat from the pan, the contents were transferred to a saucepan and blended with half of the wine.

The mixture was then put back into the oven until the liquids had been reduced by half at 200°C for 20 minutes.

The remaining part of the wine and the water were added to the mixture along with the missing ingredients (celery stalk, tomatoes, champignon mushrooms, garlic, and aromas) and left to cook for 3 hours at about 100°C.

The resulting mixture was then filtered in a gauze colander and the liquid was reduced by one third of its initial volume at 100°C for 4 hours, thus obtaining the meat stock.

The meat stock prepared in this example was used in all the subsequent examples where this ingredient is mentioned.

### Example 5 - Preparation of a composition of the invention

The ingredients of Table 2 were weighed and added, except for the rice starch gel, in the glass of the thermal cutter, programmed at a temperature of 28°C and at a rate of 6,000 rpm.

**Table 2**

| **Ingredients** | **Quantity (grams)** |
|---|---|
| Cheese (Grana Padano PDO) | 100 |
| Centrifuged butter | 100 |
| Rice starch gel | 150 |
| Sour butter | 20 |
| Salt | 13 |
| Meat stock | 1 |

Rice starch gel was added to the mixture and the ingredients were dissolved and amalgamated in the thermal cutter at a rate of 12,000 rpm and at a temperature of 30°C for 20 seconds, thus obtaining the composition of the invention in the form of a stable and homogeneous emulsion.

### Example 6 - Preparation of a composition of the invention

The ingredients of Table 3 were weighed and added, except for the starch gel, in the glass of the thermal cutter, programmed at a temperature of 28°C and at a rate of 6,000 rpm.

**Table 3**

| **Ingredients** | **Quakity (gram)** |
|---|---|
| Cheese (Grana Padano PDO) | 100 |
| Surfacing butter | 100 |
| Wine vinegar | 10 |
| Rice starch gel | 150 |
| Salt | 13 |
| Vegetable extract | 1 |

Rice starch gel was added to the mixture and the ingredients were dissolved and amalgamated in the thermal cutter at a rate of 12,000 rpm and at a temperature of 30°C for 20 seconds, thus obtaining the composition of the invention in the form of a stable and homogeneous emulsion.

### Example 7 - Preparation of an instant smoke-flavoured dressing

The ingredients of Table 4 were weighed and added, except for the rice starch gel, in the glass of the thermal cutter, programmed at a temperature of 28°C and at a rate of 6,000 rpm.

**Table 4**

| **Ingredients** | **Quantity** |
|---|---|
| Cheese (Grana Padano PDO) | 300 g |
| Centrifuged butter | 450 g |
| Rice starch gel | 450 g |
| Sour butter | 40 g |
| Salt | 40 g |
| Smoke flavouring | 100 drops |

Rice starch gel was added to the mixture and the ingredients were dissolved and amalgamated for 3 minutes in the thermal cutter at a rate of 12,000 rpm and at a temperature of 30°C for 20 seconds, thus obtaining the composition of the invention in the form of a stable and homogeneous emulsion.

### Example 8 - Preparation of an instant cuttlefish-ink-flavoured dressing

The ingredients of Table 5 were weighed and added, except for the rice starch gel, in the glass of the thermal cutter, programmed at a temperature of 28°C and at a rate of 6,000 rpm.

**Table 5**

| **Ingredients** | **Quantity (grams)** |
|---|---|
| Cheese (Grana Padano PDO) | 200 |
| Centrifuged butter | 300 |
| Rice starch gel | 450 |
| Sour butter | 40 |
| Salt | 40 |
| Cuttlefish-ink flavouring | 40 |
| Garlic | 3 |

Rice starch gel was added to the mixture and the ingredients were dissolved and amalgamated for 3 minutes in the thermal cutter at a rate of 12,000 rpm and at a temperature of 30°C for 20 seconds.

### Example 9 - Preparation of an instant red turnip-flavoured dressing

The ingredients of Table 6 were weighed and added, except for the rice starch gel, in the glass of the thermal cutter, programmed at a temperature of 28°C and at a rate of 6,000 rpm.

**Table 6**

| **Ingredients** | **Quantity (grams)** |
|---|---|
| Cheese (Grana Padano PDO) | 100 |
| Centrifuged butter | 150 |
| Sour butter | 20 |
| Rice starch gel | 150 |
| Salt | 13 |
| Red turnip powder flavouring | 25 |

Rice starch gel was added to the mixture and the ingredients were dissolved and amalgamated for 3 minutes in the thermal cutter at a rate of 12,000 rpm and at a temperature of 30°C for 20 seconds, thus obtaining the composition of the invention in the form of a stable and homogeneous emulsion.

### Example 10 - Preparation of an instant saffron-flavoured dressing

The ingredients of Table 7 were weighed and added, except for the rice starch gel, in the glass of the thermal cutter, programmed at a temperature of 28°C and at a rate of 6,000 rpm..

**Table 7**

| **Ingredients** | **Quantity (grams)** |
|---|---|
| Cheese (Grana Padano PDO) | 300 |
| Centrifuged butter | 450 |
| Rice starch gel | 450 |
| Sour butter | 40 |
| Salt | 40 |
| Saffron powder flavouring | 1 |
| Meat stock | 3 |

Rice starch gel was added to the mixture and the ingredients were dissolved and amalgamated for 3 minutes in the thermal cutter at a rate of 12,000 rpm and at a temperature of 30°C for 20 seconds, thus obtaining the composition of the invention in the form of a stable and homogeneous emulsion.

### Example 11 - Preparation of an instant basil-flavoured dressing

Basil leaves alone were taken and washed for 10 minutes in a solution of 20 grams of sodium bicarbonate in 5 litres of water.

The ingredients of Table 8 were weighed and added, except for the rice starch gel, in the glass of the thermal cutter, programmed at a temperature of 28°C and at a rate of 6,000 rpm..

**Table 8**

| **Ingredients** | **Quantity (grams)** |
|---|---|
| Cheese (Grana Padano PDO) | 100 |
| Centrifuged butter | 120 |
| Rice starch gel | 150 |
| Sour butter | 20 |
| Salt | 13 |
| Basil | 30 |

Rice starch gel was added to the mixture and the ingredients were dissolved and amalgamated for 3 minutes in the thermal cutter at a rate of 12,000 rpm and at a temperature of 30°C for 20 seconds, thus obtaining the composition of the invention in the form of a stable and homogeneous emulsion.

### Example 12 - Preparation of single portions of the instant dressings of Examples 7-11

Once the compositions of the invention according to Examples 7-11 had been obtained, in the form of stable and homogeneous emulsions, the latter were poured into silicone moulds and subjected to blast chilling at +3°C for 10 minutes in the food blast chiller.

The emulsion thus obtained was removed from the silicone moulds and single portions of 25 grams each of instant dressing of the composition of the invention were obtained, which were then vacuum-packed and subjected to blast chilling at -20°C for 2 hours.

### Example 13 - Preparation of a risotto using a single portion of instant dressing

200 grams of precooked rice, obtained according to Example 3, were weighed and 100 grams of water and 75 grams of instant dressing were added, corresponding to 3 single portions of instant dressing obtained according to the method described in Example 12 using the ingredients indicated in Table 4 (Example 7, instant smoke-flavoured dressing). The whole mixture was brought to boil at 100°C for 3 minutes until the single portions had dissolved. The ingredients were mixed with regular and decisive movements until a perfect wave rice had been obtained.

Similar results were obtained using single portions prepared with the dressings of Examples 8-11 (Tables 5-8).

### Example 14

A risotto according to the present invention was prepared according to what is specified in Example 13 with the single portion of instant dressing obtained according to the method described in Example 12 using the ingredients indicated in Table 4 (Example 7), with the only difference that the rice starch gel was prepared as indicated in Example 1, using Barbera red wine instead of water. This risotto was compared with two risottos obtained by applying the same procedure indicated above, with the same ingredients shown in Table 4, with the only difference that the rice starch gel was respectively replaced with the same amount of
i) tapioca starch gel
ii) modified corn starch gel,
prepared with the same procedure indicated above for the rice starch gel.

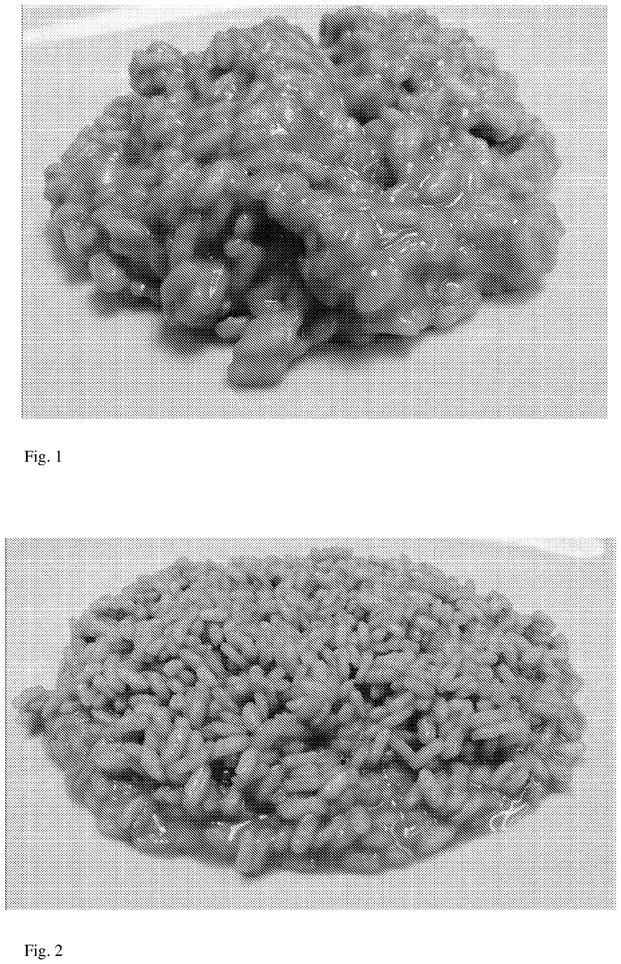

In test i) tapioca starch was used, i.e. the starch most widely used in the food industry for its stability and creaminess. In the present case, however, this starch led to the formation of a risotto with an excessively gelled consistency in which the rice formed a cream that tends to solidify, with the rice itself packed. The product obtained and represented in Figure 1 has nothing in common with the wave risotto of the classic Italian rice recipe.

In test ii) modified starch was used, in this case modified corn starch, which dissolved rapidly and, already in the pot, failed to bind and create the classic emulsion cream between water and fat. As can be seen from the photograph in Figure 2, the rice is grainy and loose, with a watery tendency that is accentuated on the palate.

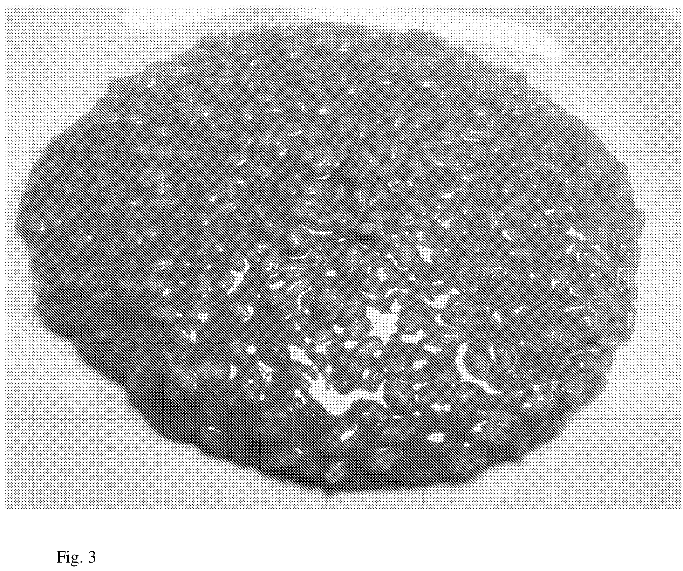

The rice starch dressing according to the present invention, on the contrary, in addition to keeping the taste of the raw material unaltered, gave the rice a natural and unique consistency. The rice starch gel gives a creamy and homogeneous structure to the cooked and creamed product. Visibly, on the plate, the product obtained is shiny and perfectly blended (figure 3).

The results of the above tests show that the use of the rice starch gel according to the present invention allows a creamy risotto to be obtained with a very low residue of free water.

### Example 15

The risotto prepared as indicated in Example 13 with the single portion of instant dressing obtained according to the method described in Example 12 using the ingredients shown in Table 7 (Example 10) was compared with two risottos btained by applying the same procedure and the same ingredients as in Table 7, with the only difference that the sour butter, added as an acidity regulator, was replaced by
iii) lactic acid in a quantity ranging from 0.1 to 0.15 w/w with respect to the weight of the rice starch gel and
iv) citric acid in a quantity ranging from 0.02 to 0.05 w/w with respect to the weight of the rice starch gel.

The products/risottos obtained from test iii) and test iv) were compared with the product/risotto according to the invention of Example 15 and were subjected to an evaluation test by a panel of nine people, with an overall assessment that can be summarized as follows:
The risotto in test iii), prepared with lactic acid as an acidifier, was extremely sour and basically not very harmonious, revealing a defect in the balance of flavours.

The risotto in test iv), prepared with citric acid as an acidifier, was flat, devoid of a marked aromaticity, also in this case showing a defect in the balance of flavours.

The risotto according to the present invention with sour butter as an acidifier was, on the contrary, extremely harmonious and balanced, also characterized by an enhanced flavour.

## Claims

1. A food composition comprising:
- rice starch gel, wherein said rice starch gel is obtained by cooking the rice starch in a quantity of water from 8 to 12 times the weight of the starch;
- centrifuged and/or surfacing butter in a ratio of 0.67:1 by weight with respect to the weight (w/w) of the rice starch gel;
- a cheese selected from Parmigiano Reggiano DOP (Parmesan cheese) and Grana Padano DOP in a ratio of 0.4:0.8 w/w with respect to the weight of the rice starch gel;
- an acidity regulator selected from sour butter in a ratio of 0.05:0.15 w/w with respect to the weight of the rice starch gel and wine vinegar in a ratio of 0.05:0.08 w/w with respect to the weight of the rice starch gel;
- salt in a ratio of 0.08:0.1 w/w with respect to the weight of the rice starch gel; and
- optionally, one or more ingredients selected from garlic in a ratio of 0.009:0.02 w/w, meat stock in a ratio of 0.009:0.02 w/w, meat extract in a ratio of 0.009:0.02 w/w, plant extract in a ratio of 0.009:0.02 w/w, with respect to the weight of the rice starch gel.

2. The food composition according to claim 1, wherein said food composition is an instant dressing for risottos and further comprises a flavouring agent.

3. The food composition according to claim 2, wherein said flavouring agent is selected from:
- cuttlefish ink in a quantity ranging from 0.08 to 0.1 parts by weight with respect to the weight of the rice starch gel;
- red turnip in a quantity ranging from 0.16 to 0.18 parts by weight with respect to the weight of the rice starch gel;
- saffron in a quantity ranging from 0.001 to 0.003 parts by weight with respect to the weight of the rice starch gel;
- basil in leaves in a quantity ranging from 0.1 to 0.3 parts by weight with respect to the weight of the rice starch gel;
- smoke in a quantity ranging from 20 to 25 drops per 100 g of rice starch gel.

4. The food composition according to any of claims 2 or 3, wherein said composition can be divided into single portions of instant dressing of about 25 grams each.

5. A process for obtaining the composition according to claim 1, comprising the following steps:
a) preparing a rice starch gel by mixing water and rice in a thermal cutter at a temperature ranging from 100 to 70°C, at a rate ranging from 2,000 rpm to 6,000 rpm for a duration within the range of 10 to 30 minutes,
b) mixing centrifuged and/or surfacing butter, a cheese selected from Parmigiano Reggiano DOP (Parmesan cheese) and Grana Padano DOP, an acidity regulator selected from sour butter and wine vinegar, salt and at least one additional ingredient selected from garlic, meat stock, meat extract, vegetable extract, wherein said sour butter is an emulsion of onions with butter and white wine vinegar, said emulsion being prepared by mixing onions, butter, white wine and white wine vinegar, cooking for a duration within the range of 5 to 20 minutes, at a temperature within the range of 70 to 110°C and subsequent filtration;
c) dissolving and mixing the mixture of step b) in a thermal cutter at a rate within the range of 14,000 to 10,000 rpm and at a temperature within the range of 10 to 50°C for a duration within the range of 10 to 30 seconds.

6. The process according to claim 5, wherein in step a), the water is in a quantity of 1,400 grams, the rice is in a quantity of 150 grams and the mixing takes place in a thermal cutter at a temperature of 85°C, at a rate of 4,000 rpm/minute for 15 minutes.

7. The process according to any of claims 5 or 6, wherein in step b), the onions are in a quantity of 160 grams, the butter is in a quantity of 250 grams, the white wine is in a quantity of 250 ml and the white wine vinegar is in a quantity of 110 ml, and cooking is effected for a duration of 10 minutes, at a temperature of 100°C.

8. The process according to any of claims 5 or 6, wherein in step b), the wine vinegar is added in a quantity ranging from 20 to 30 grams.

9. The method according to any of claims 5-8, wherein in step b), the components are in quantities described for the composition of claim 1.

10. The process according to any of claims 5-9, wherein step c) is effected at a rate of 12,000 revolutions and at a temperature of 30°C for a duration of 20 seconds.

11. The process according to any of claims 5-10, wherein said process is for preparing an instant dressing and wherein a flavouring agent is added in step b) or step c) of the process.

12. The process according to claim 11, wherein said flavouring agent is selected from smoke, cuttlefish ink, red turnip, saffron powder and basil.

13. The process according to any of claims 5-12, wherein the acidity regulator is sour butter when centrifuged butter is used and the acidity regulator is wine vinegar when surfacing butter is used.

14. The process according to any of claims 5-13, further comprising the following steps:
d) dividing the food composition or instant dressing into single portions of about 25 grams each, in moulds;
e) subjecting the single portions in moulds to blast chilling within a temperature range of 0 to + 6°C, for a duration ranging from 5 to 15 minutes;
f) removing the single portions from the moulds;
g) vacuum-packing the single portions of step f);
h) subjecting the vacuum-packed single portions to blast chilling at a temperature ranging from -30 to -10°C for a duration of 1 to 3 hours.

15. A procedure for obtaining an instant wave risotto, comprising the following steps:
i) preparing a precooked rice by boiling rice for 10 minutes in a quantity of water ranging from 1.8 to 2.2 times the weight of the rice;
l) adding to the precooked rice prepared in step i) from 50 to 60 grams of water and from 40 to 50 grams of the food composition or instant dressing according to any of claims 1-4 per 100 grams of pre-cooked rice;
l') if in step 1) only the food composition was added to the rice, adding a flavouring agent;
m) bringing the mixture of step 1) or l') to boiling point and stirring until the composition has dissolved.

## Patentansprüche

1. Lebensmittelzusammensetzung, die Folgendes umfasst:
- Reisstärkegel, wobei das Reisstärkegel durch Kochen der Reisstärke in einer Wassermenge, die das 8- bis 12-fache des Gewichts der Stärke beträgt, erhalten wird;
- zentrifugierte und/oder oberflächenbehandelte Butter in einem Gewichtsverhältnis von 0,67:1 bezogen auf das Gewicht (Gew./Gew.) des Reisstärkegels;
- einen Käse, ausgewählt aus Parmigiano Reggiano DOP (Parmesankäse) und Grana Padano DOP in einem Verhältnis von 0,4:0,8 Gew./Gew., bezogen auf das Gewicht des Reisstärkegels;
- einen Säureregulator, ausgewählt aus saurer Butter in einem Verhältnis von 0,05:0,15 Gew./Gew., bezogen auf das Gewicht des Reisstärkegels, und Weinessig in einem Verhältnis von 0,05:0,08 Gew./Gew., bezogen auf das Gewicht des Reisstärkegels;
- Salz in einem Verhältnis von 0,08:0,1 Gew./Gew., bezogen auf das Gewicht des Reisstärkegels; und
- gegebenenfalls eine oder mehrere Zutaten, ausgewählt aus Knoblauch in einem Verhältnis von 0,009:0,02 Gew./Gew., Fleischbrühe in einem Verhältnis von 0,009:0,02 Gew./Gew., Fleischextrakt in einem Verhältnis von 0,009:0,02 Gew./Gew., Pflanzenextrakt in einem Verhältnis von 0,009:0,02 Gew./Gew., bezogen auf das Gewicht des Reisstärkegels.

2. Lebensmittelzusammensetzung nach Anspruch 1, wobei die Lebensmittelzusammensetzung ein Instant-Dressing für Risottos ist und ferner einen Geschmacksstoff enthält.

3. Lebensmittelzusammensetzung nach Anspruch 2, wobei der Geschmacksstoff ausgewählt ist aus:
- Tintenfischtinte in einer Menge im Bereich von 0,08 bis 0,1 Gewichtsteilen, bezogen auf das Gewicht des Reisstärkegels;
- rote Rüben in einer Menge im Bereich von 0,16 bis 0,18 Gewichtsteilen, bezogen auf das Gewicht des Reisstärkegels;
- Safran in einer Menge im Bereich von 0,001 bis 0,003 Gewichtsteilen, bezogen auf das Gewicht des Reisstärkegels;
- Basilikum in Blättern in einer Menge im Bereich von 0,1 bis 0,3 Gewichtsteilen, bezogen auf das Gewicht des Reisstärkegels;
- Raucharoma in einer Menge im Bereich von 20 bis 25 Tropfen pro 100 Gramm Reisstärkegel.

4. Lebensmittelzusammensetzung nach einem der Ansprüche 2 oder 3, wobei die Zusammensetzung in Einzelportionen von Instant-Dressing von jeweils etwa 25 Gramm aufgeteilt werden kann.

5. Verfahren zum Erhalten der Zusammensetzung nach Anspruch 1, umfassend die folgenden Schritte:
a) Zubereiten eines Reisstärkegels durch Mischen von Wasser und Reis in einem Thermoschneider bei einer Temperatur im Bereich von 100 bis 70°C, bei einer Geschwindigkeit im Bereich von 2.000 U/min bis 6.000 U/min für eine Dauer innerhalb des Bereiches von 10 bis 30 Minuten,
b) Mischen von zentrifugierter und/oder oberflächenbehandelter Butter, einem Käse, ausgewählt aus Parmigiano Reggiano DOP (Parmesankäse) und Grana Padano DOP, einem Säureregulator, ausgewählt aus saurer Butter und Weinessig, Salz und mindestens einer zusätzlichen Zutat, ausgewählt aus Knoblauch, Fleischbrühe, Fleischextrakt, Gemüseextrakt, wobei die saure Butter eine Emulsion von Zwiebeln mit Butter und Weißweinessig ist, wobei die Emulsion durch Mischen von Zwiebeln, Butter, Weißwein und Weißweinessig, Kochen für eine Dauer innerhalb des Bereiches von 5 bis 20 Minuten bei einer Temperatur innerhalb des Bereiches von 70 bis 110°C und anschließende Filtration zubereitet wird;
c) Auflösen und Mischen der Mischung aus Schritt b) in einem Thermoschneider bei einer Geschwindigkeit innerhalb des Bereiches von 14.000 bis 10.000 U/min und bei einer Temperatur innerhalb des Bereiches von 10 bis 50°C für eine Dauer innerhalb des Bereiches von 10 bis 30 Sekunden.

6. Verfahren nach Anspruch 5, wobei in Schritt a) das Wasser in einer Menge von 1.400 Gramm vorliegt, der Reis in einer Menge von 150 Gramm vorliegt und das Mischen in einem Thermoschneider bei einer Temperatur von 85 °C bei einer Geschwindigkeit von 4.000 U/min/Minute für 15 Minuten erfolgt.

7. Verfahren nach einem der Ansprüche 5 oder 6, wobei in Schritt b) die Zwiebeln in einer Menge von 160 Gramm, die Butter in einer Menge von 250 Gramm, der Weißwein in einer Menge von 250 ml und der Weißweinessig in einer Menge von 110 ml vorliegen und das Kochen für eine Dauer von 10 Minuten bei einer Temperatur von 100 °C durchgeführt wird.

8. Verfahren nach einem der Ansprüche 5 oder 6, wobei in Schritt b) der Weinessig in einer Menge im Bereich von 20 bis 30 Gramm zugegeben wird.

9. Verfahren nach einem der Ansprüche 5-8, wobei in Schritt b) die Komponenten in den für die Zusammensetzung nach Anspruch 1 beschriebenen Mengen vorliegen.

10. Verfahren nach einem der Ansprüche 5-9, wobei Schritt c) bei einer Geschwindigkeit von 12.000 Umdrehungen und bei einer Temperatur von 30°C für eine Dauer von 20 Sekunden durchgeführt wird.

11. Verfahren nach einem der Ansprüche 5 bis 10, wobei das Verfahren zur Zubereitung eines Instant-Dressings dient und wobei in Schritt b) oder Schritt c) des Verfahrens ein Geschmacksstoff zugegeben wird.

12. Verfahren nach Anspruch 11, wobei der Geschmacksstoff aus Raucharoma, Tintenfischtinte, roter Rübe, Safranpulver und Basilikum ausgewählt wird.

13. Verfahren nach einem der Ansprüche 5 bis 12, wobei der Säureregulator saure Butter ist, wenn zentrifugierte Butter verwendet wird, und der Säureregulator Weinessig ist, wenn oberflächenbehandelte Butter verwendet wird.

14. Verfahren nach einem der Ansprüche 5-13, das ferner die folgenden Schritte umfasst:
d) Aufteilen der Lebensmittelzusammensetzung oder des Instant-Dressings in Einzelportionen von jeweils etwa 25 Gramm in Formen;
e) Unterziehen der Einzelportionen in den Formen einer Schnellabkühlung innerhalb eines Temperaturbereichs von 0 bis + 6°C für eine Dauer im Bereich von 5 bis 15 Minuten;
f) Entnehmen der Einzelportionen aus den Formen;
g) Vakuumverpacken der Einzelportionen aus Schritt f);
h) Unterziehen der vakuumverpackten Einzelportionen einer Schnellabkühlung bei einer Temperatur im Bereich von -30 bis -10 °C für eine Dauer von 1 bis 3 Stunden.

15. Prozedur zum Erhalten eines Instant-Wellen-Risottos, das die folgenden Schritte umfasst:
i) Zubereiten eines vorgekochten Reises durch 10-minütiges Kochen vom Reis in einer Wassermenge, die im Bereich vom 1,8-fachen bis das 2,2-fache des Gewichts des Reises liegt;
l) Zugeben von 50 bis 60 Gramm Wasser und 40 bis 50 Gramm der Lebensmittelzusammensetzung oder des Instant-Dressings nach einem der Ansprüche 1 bis 4 pro 100 Gramm vorgekochten Reis zu dem in Schritt i) zubereiteten vorgekochten Reis;
l') wenn in Schritt l) nur die Lebensmittelzusammensetzung dem Reis zugegeben wurde, Zugeben eines Geschmacksstoffs;
m) Bringen der Mischung aus Schritt l) oder l') zum Sieden und Rühren, bis sich die Zusammensetzung aufgelöst hat.

## Revendications

1. Composition alimentaire comprenant :
- un gel d'amidon de riz, dans laquelle ledit gel d'amidon de riz est obtenu en cuisant l'amidon de riz dans une quantité d'eau de 8 à 12 fois le poids de l'amidon ;
- du beurre centrifugé et/ou de surfaçage dans un rapport de 0,67:1 en poids par rapport au poids (p/p) du gel d'amidon de riz ;
- un fromage sélectionné parmi le Parmigiano Reggiano DOP (Parmesan) et le Grana Padano DOP dans un rapport de 0,4:0,8 p/p par rapport au poids du gel d'amidon de riz ;
- un régulateur d'acidité sélectionné parmi le beurre aigre dans un rapport de 0,05:0,15 p/p par rapport au poids du gel d'amidon de riz et le vinaigre de vin dans un rapport de 0,05:0,08 p/p par rapport au poids du gel d'amidon de riz ;
- du sel dans un rapport de 0,08:0,1 p/p par rapport au poids du gel d'amidon de riz ; et
- facultativement, un ou plusieurs ingrédients sélectionnés parmi l'ail dans un rapport de 0,009:0,02 p/p, un bouillon de viande dans un rapport de 0,009:0,02 p/p, un extrait de viande dans un rapport de 0,009:0,02 p/p, un extrait de plantes dans un rapport de 0,009:0,02 p/p, par rapport au poids du gel d'amidon de riz.

2. Composition alimentaire selon la revendication 1, dans laquelle ladite composition alimentaire est une sauce instantanée pour risottos et comprend en outre un agent aromatisant.

3. Composition alimentaire selon la revendication 2, dans laquelle l'agent aromatisant est sélectionné parmi :
- l'encre de seiche dans une quantité allant de 0,08 à 0,1 partie en poids par rapport au poids du gel d'amidon de riz ;
- le navet rouge dans une quantité allant de 0,16 à 0,18 partie en poids par rapport au poids du gel d'amidon de riz ;
- le safran dans une quantité allant de 0,001 à 0,003 partie en poids par rapport au poids du gel d'amidon de riz ;
- le basilic en feuilles dans une quantité allant de 0,1 à 0,3 partie en poids par rapport au poids du gel d'amidon de riz ;
- de la fumée dans une quantité allant de 20 à 25 gouttes pour 100 g de gel d'amidon de riz.

4. Composition alimentaire selon l'une quelconque des revendications 2 ou 3, dans laquelle ladite composition peut être divisée en portions individuelles de sauce instantanée d'environ 25 grammes chacune.

5. Procédé pour l'obtention de la composition selon la revendication 1, comprenant les étapes suivantes :
a) la préparation d'un gel d'amidon de riz en mélangeant de l'eau et du riz dans un hachoir thermique à une température allant de 100 à 70 °C, à une vitesse allant de 2 000 tr/min à 6 000 tr/min pendant une durée au sein de la plage de 10 à 30 minutes,
b) le mélange de beurre centrifugé et/ou de surfaçage, d'un fromage sélectionné parmi le Parmigiano Reggiano DOP (Parmesan) et le Grana Padano DOP, d'un régulateur d'acidité sélectionné parmi le beurre aigre et le vinaigre de vin, de sel et d'au moins un ingrédient additionnel sélectionné parmi l'ail, un bouillon de viande, un extrait de viande, un extrait de légumes, dans lequel ledit beurre aigre est une émulsion d'oignons avec du beurre et du vinaigre de vin blanc, ladite émulsion étant préparée en mélangeant des oignons, du beurre, du vin blanc et du vinaigre de vin blanc, en cuisant pendant une durée au sein de la plage de 5 à 20 minutes, à une température au sein de la plage de 70 à 110 °C et filtration ultérieure ;
c) la dissolution et le mélange du mélange de l'étape b) dans un hachoir thermique à une vitesse au sein de la plage de 14 000 à 10 000 tr/min et à une température au sein de la plage de 10 à 50 °C pendant une durée au sein de la plage de 10 à 30 secondes.

6. Procédé selon la revendication 5, dans lequel à l'étape a), l'eau est dans une quantité de 1 400 grammes, le riz est dans une quantité de 150 grammes et le mélange a lieu dans un hachoir thermique à une température de 85 °C, à une vitesse de 4 000 tr/min pendant 15 minutes.

7. Procédé selon l'une quelconque des revendications 5 ou 6, dans lequel à l'étape b), les oignons sont dans une quantité de 160 grammes, le beurre est dans une quantité de 250 grammes, le vin blanc est dans une quantité de 250 ml et le vinaigre de vin blanc est dans une quantité de 110 ml, et la cuisson est effectuée pendant une durée de 10 minutes, à une température de 100 °C.

8. Procédé selon l'une quelconque des revendications 5 ou 6, dans lequel à l'étape b), le vinaigre de vin est ajouté dans une quantité allant de 20 à 30 grammes.

9. Procédé selon l'une quelconque des revendications 5 à 8, dans lequel à l'étape b), les constituants sont dans les quantités décrites pour la composition de la revendication 1.

10. Procédé selon l'une quelconque des revendications 5 à 9, dans lequel l'étape c) est effectuée à une vitesse de 12 000 tours et à une température de 30 °C pendant une durée de 20 secondes.

11. Procédé selon l'une quelconque des revendications 5 à 10, dans lequel ledit procédé est destiné à la préparation d'une sauce instantanée et dans lequel un agent aromatisant est ajouté à l'étape b) ou à l'étape c) du procédé.

12. Procédé selon la revendication 11, dans lequel ledit agent aromatisant est sélectionné parmi la fumée, l'encre de seiche, le navet rouge, la poudre de safran et le basilic.

13. Procédé selon l'une quelconque des revendications 5 à 12, dans lequel le régulateur d'acidité est le beurre aigre lorsque du beurre centrifugé est utilisé et le régulateur d'acidité est le vinaigre de vin lorsque du beurre de surfaçage est utilisé.

14. Procédé selon l'une quelconque des revendications 5 à 13, comprenant en outre les étapes suivantes :
d) la division de la composition alimentaire ou de la sauce instantanée en portions individuelles d'environ 25 grammes chacune, dans des moules ;
e) la soumission des portions individuelles dans des moules à un refroidissement par écoulement au sein d'une plage de températures de 0 à +6 °C, pendant une durée allant de 5 à 15 minutes ;
f) le retrait des portions individuelles des moules ;
g) le conditionnement sous vide des portions individuelles de l'étape f) ;
h) la soumission des portions individuelles conditionnées sous vide à un refroidissement par écoulement à une température allant de -30 à -10 °C pendant une durée de 1 à 3 heures.

15. Procédure pour l'obtention d'un risotto à la vague instantané, comprenant les étapes suivantes :
i) la préparation d'un riz précuit en faisant bouillir du riz pendant 10 minutes dans une quantité d'eau allant de 1,8 à 2,2 fois le poids du riz ;
l) l'ajout au riz précuit préparé à l'étape i) de 50 à 60 grammes d'eau et de 40 à 50 grammes de la composition alimentaire ou sauce instantanée selon l'une quelconque des revendications 1 à 4 pour 100 grammes de riz précuit ;
l') si, à l'étape l), seule la composition alimentaire a été ajoutée au riz, l'ajout d'un agent aromatisant ;
m) le fait d'amener le mélange de l'étape l) ou l') au point d'ébullition et l'agitation jusqu'à ce que la composition se soit dissoute.
